# EUROPEAN PATENT APPLICATION

(11) **EP 2 572 855 A1**
(43) Date of publication of application: **27.03.2013**
(21) Application number: 12006596.6
(22) Date of filing: 20.09.2012
(51) Int. Cl.: B29C 45/76

(54) **Injection molding system**

(30) Priority: 21.09.2011 JP 2011206447
(71) Applicant: SUMITOMO HEAVY INDUSTRIES, LTD., Tokyo 141-6025 (JP)
(72) Inventor: Amano, Mitsuaki, Chiba-Shi Chiba 263-0001 (JP); Yoshizawa, Nobuhiro, Chiba-Shi Chiba 263-0001 (JP)
(74) Representative: Schmidbauer, Andreas Konrad

(57) **Abstract**

An injection molding system according to an embodiment of the present invention includes an injection molding part (5, 6) configured to perform a molding operation, a power supply part (75) configured to supply power to a peripheral equipment (80), and a control part (70) configured to control the injection molding part (5, 6) and the power supply part (75). The control part (70) includes a power supply control part (71) configured to switch to supply or shut off power to the peripheral equipment (80). Preferably, the power supply control part (71) switches to supply or shut off power to the peripheral equipment (80) depending on an operational status of the injection molding part (5, 6). More preferably, the power supply control part (71) shuts off power to the peripheral equipment (80) when the molding operation shuts down.

## Description

### BACKGROUND OF THE INVENTION

### 1. Field of the Invention

The present invention relates to an injection molding system which can supply power to a peripheral equipment.

### 2. Description of the Related Art

Conventionally, an automatic operating system which activates an injection molding machine and its peripheral equipment at a predetermined time in a predetermined order is known (see JPH06-114906A).

This automatic operating system handles both the injection molding machine and the peripheral equipment as coequal controlled objects. The automatic operating system exchanges a control signal with each of the injection molding machine and the peripheral equipment which are individually powered so that the automatic operating system can start up the injection molding machine and the peripheral equipment in a predetermined order.

However, the automatic operating system only controls start-ups of each of the injection molding machine and the peripheral equipment. The automatic operating system does not switch whether to supply or shut off power to each of the injection molding machine and the peripheral equipment. Thus, the automatic operating system leaves a situation where the peripheral equipment remains connected to a power source, regardless of whether the automatic operating system has already started up the peripheral equipment or not. That is, the automatic operating system leave a situation where the peripheral equipment consumes electricity even at times other than during molding operation. Therefore, the automatic operating system can not reduce power consumption sufficiently.

### SUMMARY OF THE INVENTION

In consideration of the above, the present invention is intended to provide an injection molding system which reduces power consumption of a peripheral equipment.

To meet the above objective, an injection molding system according to an embodiment of the present invention comprises an injection molding part configured to perform a molding operation, a power supply part configured to supply power to a peripheral equipment, and
a control part configured to control the injection molding part and the power supply part, the control part including a power supply control part configured to switch to supply or shut off power to the peripheral equipment.

According to the above, the present invention can provide an injection molding system which reduces power consumption of a peripheral equipment.

### BRIEF DESCRIPTION OF THE DRAWINGS

FIG. 1 is a diagram illustrating a configuration example of an injection molding system according to an embodiment of the present invention.
FIG. 2 is a diagram illustrating an example of a calendar setting screen.

### DETAILED DESCRIPTION OF THE PREFERRED EMBODIMENT

With reference to the figures, embodiments of the present invention are described in the following.

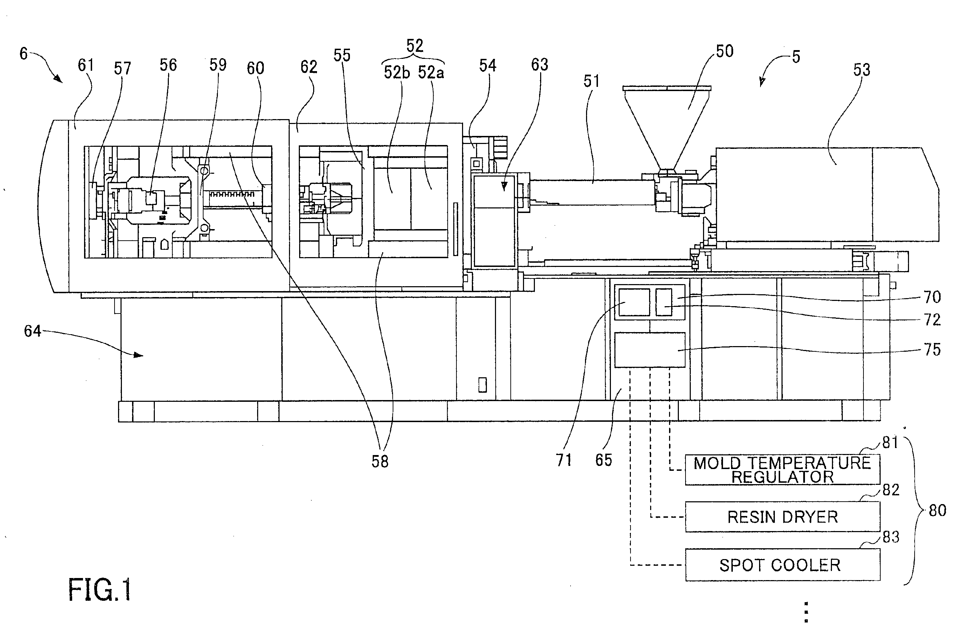

FIG. 1 is a diagram illustrating a configuration example of an injection molding system according to an embodiment of the present invention. The injection molding system mainly includes an injection molding part comprised of an injection device 5 and a mold clamping device 6.

The injection device 5 melts and plasticizes resin fed through a hopper 50 in an injection cylinder 51 in which temperature is controlled by a heater (not shown). Specifically, the injection device 5 rotates a screw (not shown) in the injection cylinder 51 by using a dosing motor (not shown), and feeds the melted resin to a tip section of the injection cylinder 51.

Also, the injection device 5 injects the melted resin, which has been fed into the tip section of the injection cylinder 51, into a cavity space (not shown) in a mold device 52. Specifically, the injection device 5 axially moves the screw toward the tip section of the injection cylinder 51 by an injection motor (not shown) disposed in an injection cover 53, and injects the melted resin into the cavity space from the tip section of the injection cylinder 51. The mold device 52 includes a fixed mold 52a attached to a fixed platen 54 and a movable mold 52b attached to a movable platen 55. The cavity space is formed by bringing the movable mold 52b into contact with the fixed mold 52a.

The mold clamping device 6 performs a mold opening and closing operation and a mold clamping operation. Specifically, the mold clamping device 6 converts rotary movement of a mold clamping motor 57 to linear movement in a mold opening and closing direction by using a motion converting mechanism 56 such as a ball screw mechanism. The mold clamping device 6 moves the movable platen 55 closer to the fixed platen 54 along tie bars 58, and brings the movable mold 52b into contact with the fixed mold 52a.

Subsequently, the mold clamping device 6 increases force by the motion converting mechanism 56 in a mold clamping direction by using a lever mechanism 59 such as a toggle mechanism, and pushes the movable mold 52b against the fixed mold 52a with greater force. In this situation, the injection device 5 injects the melted resin, which has been fed into the tip section of the injection cylinder 51, into the cavity space in the mold device 52.

Then, after a predetermined time passes and the melted resin in the cavity space cools down and become solidified, the mold clamping device 6 moves the movable platen 55 away from the fixed platen 54 along the tie bars 58, and separates the movable mold 52b from the fixed mold 52a.

Subsequently, the mold clamping device 6 projects an ejector pin (not shown) into the movable mold 52b by using an ejector motor 60, and pushes solidified resin (a molding product) out of the movable mold 52b.

The motion converting mechanism 56, the mold clamping motor 57, the lever mechanism 59, the ejector motor 60 and the like are housed in a fixed safety cover 61. This is to restrict access by a user in the light of hazard prevention. In contrast, the mold device 52 is housed in a sliding safety cover 62. This is to assist the user to perform an operation such as mold change. Specifically, the user exposes the mold device 52 and its periphery by sliding the sliding safety cover 62 leftward in FIG. 1 into the fixed safety cover 61.

The user also sets various operations performed by the injection molding system through a setting/operating panel part 63. The various operations involve an operation by the injection device 5 and an operation by the mold clamping device 6.

The injection device 5 and the mold clamp machine 6 are installed on a frame 64 at a better working height for the user. The frame 64 includes a housing part 65 in which a control part 70 and a power supply part 75 are housed.

The control part 70 is configured to control the injection molding system. For example, the control part 70 is a computer including a Central Processing Unit (CPU), a Random Access Memory (RAM), a Read-Only Memory (ROM), a built-in clock, and the like. Specifically, the control part 70 reads out programs corresponding to each of a power supply control part 71 and a supply/shut-off setting part 72 in the ROM, loads the programs into the RAM, and causes the CPU to perform processes corresponding to each of the power supply control part 71 and the supply/shut-off setting part 72.

The power supply control part 71 is configured to switch whether to supply or shut off power to a peripheral equipment 80. For example, the power supply control part 71 switches whether to supply or shut off power to the peripheral equipment 80 depending on operational status of the injection molding part.

Specifically, the power supply control part 71 outputs a control signal to the power supply part 75 when a molding operation by the injection molding part has shut down so that the power supply part 75 can shut off power to the peripheral equipment 80.

The power supply control part 71 may output a control signal to the power supply part 75 when a main switch of the injection molding system has been switched on so that the power supply part 75 can connect the peripheral equipment 80 to the power source and start supplying power to the peripheral equipment 80.

The power supply control part 71 may output a control signal to the power supply part 75 when the main switch of the injection molding system has been switched off so that the power supply part 75 can disconnect the peripheral equipment 80 from the power source and stop supplying power to the peripheral equipment 80.

The power supply part 75 is configured to distribute power to one or more of the peripheral equipments 80. For example, the power supply part 75 is provided with one or more electrical sockets to which one or more electrical plugs of the peripheral equipments 80 are inserted. The power supply part 75 distributes electrical power from a commercial power supply (not shown) to the peripheral equipment 80 connected thereto via the electrical plug. Specifically, the power supply part 75 is provided with a switch comprised of a keep relay, a power MOSFET, an IGBT, or the like. The power supply part 75 opens or closes the switch in response to a control signal from the power supply control part 71. Consequently, the power supply part 75 allows the power supply control part 71 to switch whether to supply or shut off power to the peripheral equipment 80 under a situation where the electrical plug of the peripheral equipment 80 remains connected to the electrical socket.

The peripheral equipment 80 is configured to receive power supply from the injection molding system. For example, the peripheral equipment 80 includes a mold temperature regulator 81 configured to regulate temperature of the mold device 52, a resin dryer 82 configured to dry the resin put in the hopper 50, a spot cooler 83 configured to locally cool down the injection molding system, or the like.

The supply/shut-off setting part 72 is configured to set a timing of supplying and shutting off power to the injection molding part, an ancillary device attached to the injection molding system, the peripheral equipment, or the like. For example, the supply/shut-off setting part 72 displays a calendar setting screen D1 on a display in the setting/operating panel part 63 in response to a manipulated input by the user through the setting/operating panel part 63.

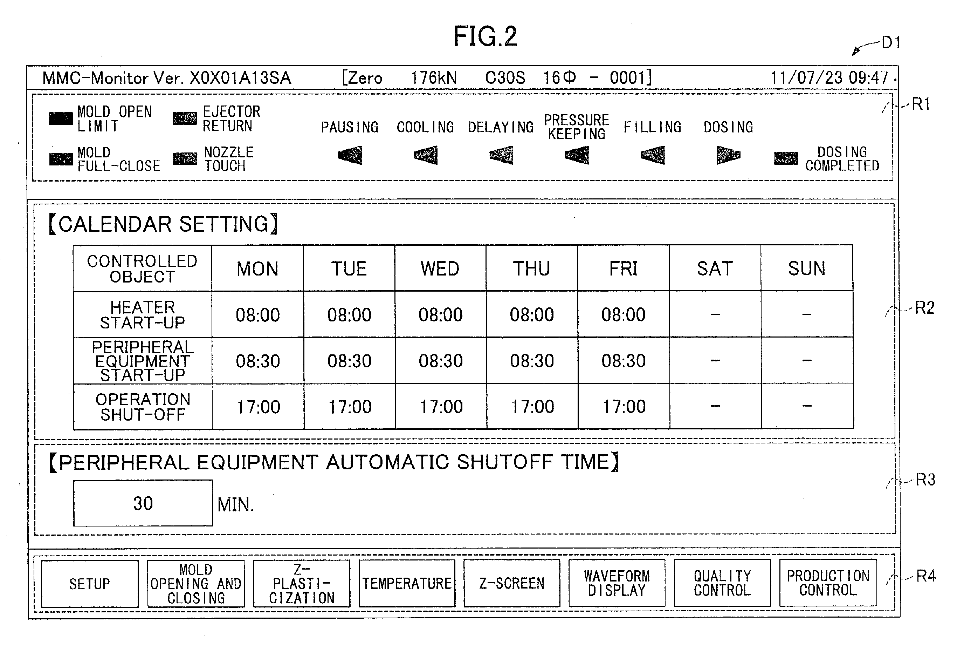

Referring to FIG. 2, switching by the power supply control part 71 whether to supply or shut off power to the peripheral equipment 80 will be described. FIG. 2 is a diagram illustrating an example of the calendar setting screen D1 displayed on the display by the supply/shut-off setting part 72.

The calendar setting screen D1 is used when the user sets a start-up/shut-off schedule of the injection molding part, the ancillary device attached to the injection molding system, the peripheral equipment 80, or the like. The calendar setting screen D1 includes an indicator region R1, a calendar setting region R2, a peripheral equipment automatic shutoff time setting region R3, and a screen switching region R4. The user can display the calendar setting screen D1 on the display at a desired timing by a manipulated input through the setting/operating panel part 63. The ancillary device attached to the injection molding system includes a heater configured to heat the injection cylinder 51, for example.

The indicator region R1 allocates indicators corresponding to each of "MOLD OPEN LIMIT", "MOLD FULL-CLOSE", "EJECTOR RETURN", "NOZZLE TOUCH", "PAUSING", "COOLING", "DELAYING", "PRESSURE KEEPING", "FILLING", "DOSING", and "DOSING COMPLETED". The indicator region R1 shows a current state of the injection molding system by turning on or off the indicators.

The calendar setting region R2 displays a start-up/shut-off schedule of the injection molding part, the ancillary device attached to the injection molding system, the peripheral equipment 80, or the like so that the user can set them.

In this embodiment, the calendar setting region R2 shows a schedule, which, on weekdays from Monday to Friday, starts up the heater for heating the injection cylinder 51 at 8:00 a.m., starts up the peripheral equipment at 8:30 a.m., and shuts off a molding operation by the injection molding part at 5:00 p.m. The calendar setting region R2 also shows that, on Saturday and Sunday as holidays, a start-up time of the heater, a start-up time of the peripheral equipment 80, and a shut-off time of a molding operation by the injection molding part have not been set. Five settings for Monday to Friday may be integrated into one setting as a weekday setting. Two settings for Saturday and Sunday may be integrated into one setting as a holiday setting.

The peripheral equipment automatic shutoff time setting region R3 displays a peripheral equipment automatic shutoff time which indicates time from when a molding operation shuts down until when the injection molding system automatically shuts off the peripheral equipment 80 so that the user can set the peripheral equipment automatic shutoff time.

In this embodiment, the peripheral equipment automatic shutoff time setting region R3 shows that the peripheral equipment automatic shutoff time is set at thirty minutes. The power supply control part 71 outputs a control signal to the power supply part 75 when thirty minutes have elapsed after a molding operation had shut down so that the power supply part 75 can shut off power to the peripheral equipment 80. A shutdown of the molding operation may include a shutdown caused by a breakdown of the injection molding system, a manual shutdown by the user, or the like, other than a shutdown based on a shut-off schedule of a molding operation set on the calendar setting region R2.

The screen switching region R4 shows software buttons for switching to various screens including "SETUP", "MOLD OPENING AND CLOSING", "Z-PLASTICIZATION", "TEMPERATURE", "Z-SCREEN", "WAVEFORM DISPLAY", "QUALITY CONTROL", and "PRODUCTION CONTROL".

The user can display a desired screen by pressing down a software button corresponding to the desired screen through using the setting/operating panel part 63.

The control part 70 causes the CPU to perform a process corresponding to the power supply control part 71 repeatedly at a predetermined frequency based on its own built-in clock.

The power supply control part 71 starts up the heater and the peripheral equipment 80 at a set time in reference to current time by the built-in clock and a start-up/shut-off schedule set on the calendar setting screen D1. In this way, the power supply control part 71 shuts off a molding operation by the injection molding part at the set time.

Specifically, the power supply control part 71 starts up the heater on Monday at 8:00 a.m., and starts up the peripheral equipment 80 at 8:30 a.m. Also, the power supply control part 71 shuts off a molding operation of the injection molding part on Monday at 5:00 p.m., and shuts off the peripheral equipment 80 thirty minutes later. In this embodiment, the power supply control part 71 shuts off the heater at the same time as it shuts off the molding operation. From Tuesday to Friday, based on a similar schedule, the power supply control part 71 starts up and shuts off the heater and the peripheral equipment 80, and shuts off the molding operation by the injection molding part.

In this embodiment, on a weekday, after the heater and the peripheral equipment 80 have been started up automatically, the user manually starts up a molding operation by the injection molding part. However, the present invention is not limited to this configuration. For example, the power supply control part 71 may start up the molding operation by the injection molding part automatically at a set time as it starts up the heater and the peripheral equipment 80 automatically.

Due to the above configuration, the injection molding system according to the present embodiment shuts off power to the peripheral equipment 80 automatically when a molding operation shuts down. Thus, the injection molding system can reduce overall power consumption including power consumption of the peripheral equipment 80.

Also, the injection molding system according to the present embodiment starts supplying power to the ancillary device attached to the injection molding system, the peripheral equipment 80, or the like, based on a start-up schedule. Thus, the injection molding system can make a state of surrounding environment of the injection molding system suitable for a molding operation before the molding operation is started up.

Also, in the above embodiment, the calendar setting screen D1 displays a start-up schedule of the peripheral equipment 80 so that the user can set it. However, the present invention is not limited to this configuration. For example, the calendar setting screen D1 may display a shut-off schedule, a suspension schedule, a temporary operation schedule, or the like, of the peripheral equipment 80 so that the user can set them. The suspension schedule is comprised of a suspension starting time and a suspension ending time. The temporary operation schedule is comprised of a temporary operation starting time and a temporary operation ending time.

Also, in the above embodiment, the calendar setting screen D1 groups plural peripheral equipments into one entity, and then shows its start-up schedule so that the user can set it. However, the present invention is not limited to this configuration. For example, the calendar setting screen D1 may allow the user to set a start-up schedule, a shut-off schedule, a suspension schedule, a temporary operation schedule, or the like of the plural peripheral equipments individually.

Also, in the above embodiment, the calendar setting screen D1 is comprised of one screen. However, the present invention is not limited to this configuration. For example, the calendar setting screen D1 may be comprised of plural screens such as screens grouped by device, screens grouped by day, screens grouped by content (start-up, shut-off, suspension, temporary operation, or the like), and screens grouped by resin used as material.

Also, in the above embodiment, the calendar setting screen D1 stores one schedule setting without any overlaps. However, the present invention is not limited to this configuration. For example, the calendar setting screen D1 may be configured to store and show plural schedule settings which are applied selectively.

As above, preferred embodiments of the present invention are described in detail. However, the present invention is not limited to the above embodiments. Various modifications and substitutions may be applied to the above embodiments without departing from the scope of the present invention.

For example, in the above embodiments, the power supply control part 71 shuts off the peripheral equipment 80 based on the peripheral equipment automatic shutoff time set on the calendar setting screen D1. However, the present invention is not limited to this configuration. For example, the power supply control part 71 may cause the user to set as a start-up condition or as a shut-off condition a fact that a predetermined event other than a shutdown of a molding operation occurs. Specifically, the power supply control part 71 may set as a shut-off condition of the resin dryer 82, which is one of the peripheral equipments 80, a fact that the daily number of manufactured molding products reaches the number corresponding to a set ratio (e.g., 90%) of it to a planned manufactured number. This is because there is no need to keep on running the resin dryer 82 until the planned manufactured number is achieved. In this case, the calendar setting screen D1 shows the set ratio so that the user can set it. Hence, the power supply control part 71 can further reduce power consumption of the peripheral equipments 80.

## Claims

1. An injection molding system comprising:
an injection molding part configured to perform a molding operation;
a power supply part configured to supply power to a peripheral equipment; and
a control part configured to control the injection molding part and the power supply part, the control part including a power supply control part configured to switch to supply or shut off power to the peripheral equipment.

2. The injection molding system as claimed in claim 1,
wherein the power supply control part switches to supply or shut off power to the peripheral equipment depending on an operational status of the injection molding part.

3. The injection molding system as claimed in claim 1 or 2,
wherein the power supply control part includes a supply/shut-off setting part configured to set a timing of supplying and shutting off power to the peripheral equipment.

4. The injection molding machine as claimed in any one of claims 1 to 3,
wherein the power supply control part shuts off power to the peripheral equipment when the molding operation shuts down.
